(19) **Europäisches Patentamt European Patent Office Office européen des brevets**

(11) **EP 3 805 307 B1**

(12) **EUROPEAN PATENT SPECIFICATION**

(45) Date of publication and mention of the grant of the patent:
**06.09.2023 Bulletin 2023/36**

(21) Application number: **19810464.8**

(22) Date of filing: **13.05.2019**

(51) International Patent Classification (IPC):
**C08L 21/00** *(2006.01)* **B60C 1/00** *(2006.01)*
**C08K 3/00** *(2018.01)* **C08K 3/013** *(2018.01)*
**C08K 3/06** *(2006.01)* **C08L 9/02** *(2006.01)*
**C08K 3/04** *(2006.01)* **C08K 5/098** *(2006.01)*
**C08L 15/00** *(2006.01)* **C08K 3/30** *(2006.01)*

(52) Cooperative Patent Classification (CPC):
(C-Sets available)
**B60C 1/0016; B60C 1/00; C08K 3/013; C08K 3/04;**
**C08K 3/06; C08K 3/30; C08K 5/098; C08L 15/00;**
C08K 2003/3045; C08K 2003/3063; Y02T 10/86

(Cont.)

(86) International application number:
**PCT/JP2019/018877**

(87) International publication number:
**WO 2019/230350 (05.12.2019 Gazette 2019/49)**

(54) **RUBBER COMPOSITION AND PNEUMATIC TIRE**

KAUTSCHUKZUSAMMENSETZUNG UND LUFTREIFEN

COMPOSITION DE CAOUTCHOUC ET PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.05.2018 JP 2018103577**

(43) Date of publication of application:
**14.04.2021 Bulletin 2021/15**

(73) Proprietor: **Bridgestone Corporation**
**Chuo-Ku**
**Tokyo 104-8340 (JP)**

(72) Inventor: **MAEDA, Ryosuke**
**Tokyo 104-8340 (JP)**

(74) Representative: **Bardehle Pagenberg**
**Partnerschaft mbB**
**Patentanwälte Rechtsanwälte**
**Prinzregentenplatz 7**
**81675 München (DE)**

(56) References cited:
**EP-A1- 3 130 630** **JP-A- H11 263 881**
**JP-A- S63 284 804** **JP-A- 2002 317 084**
**JP-A- 2010 150 375** **JP-A- 2013 099 935**

(52) Cooperative Patent Classification (CPC): (Cont.)

C-Sets
**C08K 3/013, C08L 39/08;**
**C08K 3/04, C08L 15/00;**
**C08K 3/06, C08L 15/00;**
**C08K 3/06, C08L 39/08;**
**C08K 3/30, C08L 15/00;**
**C08K 3/30, C08L 39/08;**
**C08K 5/098, C08L 15/00;**
**C08K 5/098, C08L 39/08;**
**C08L 15/00, C08L 9/00, C08K 3/04, C08K 3/30**

**Description**

Technical Field

The present invention relates to a pneumatic tire comprising a rubber composition.

Background Art

It is known that low fuel consumption can be improved by improving the dispersion of a filler in a rubber composition.

For example, in order to provide a rubber composition for a tire capable of achieving both low fuel consumption performance and crack growth resistance performance, and a pneumatic tire using the rubber composition for each member (particularly, a sidewall) of a tire, a rubber composition for a tire containing a crystalline rubber component and at least one kind selected from the group consisting of a sorbitol derivative, a saturated fatty acid, and a metal benzoate is disclosed (for example, see PTL 1).

Further, in order to provide a pneumatic tire using a cap tread and/or an undertread member having abrasion resistance and high-speed durability, it is disclosed that a cap tread is composed of a rubber composition containing 0 to 80 parts by weight of zinc methacrylate and 0 to 40 parts by weight of carbon black (provided that the total of the two is 10 to 120 parts by weight) with respect to 100 parts by weight of the total rubber containing 70 parts by weight or more of hydrogenated NBR, an undertread is composed of 0 to 120 parts by weight of zinc methacrylate and 0 to 40 parts by weight of carbon black (provided that the total of the two is 10 to 120 parts by weight) with respect to 100 parts by weight of the total rubber containing 40 parts by weight or more of hydrogenated NBR, and then the cap tread, the undertread and an adjacent rubber layer are bonded by an adhesive rubber layer obtained by mixing 100 parts by weight of a total of (A) a specific diene rubber and (B) an NBR rubber with 5 to 80 parts by weight of (C) a specific aromatic petroleum resin (for example, see PTL 2).

Citation List

Patent Literature

PTL 1: JP 2011-79961 A
PTL 2: JP 11-115406 A

Summary of Invention

Technical Problem

However, the tires disclosed in PTL 1 and PTL 2 have insufficient tire crack resistance.

An object of the present invention is to provide a pneumatic tire having excellent crack resistance and a rubber composition capable of obtaining the tire, and the problem is to solve this object.

Solution to Problem

<1> Apneumatic tire comprising a rubber composition containing: a rubber component containing a polymer having at least one polar functional group selected from the group consisting of a nitrile group and a pyridyl group; a metal compound containing a divalent metal ion in an amount of 7 to 25 parts by mass with respect to 100 parts by mass of the rubber component; a filler; and sulfur.

<2> The pneumatic tire according to <1>, wherein the divalent metal ion is at least one selected from the group consisting of a copper ion, a zinc ion, and a magnesium ion.

<3> The pneumatic tire according to <1> or <2>, wherein the metal compound is at least one selected from the group consisting of a sulfate, a hydrate of a sulfate, an acetate, and a hydrate of an acetate.

<4> The pneumatic tire according to any one of <1> to <3>, wherein the polymer is at least one selected from the group consisting of an acrylonitrile-butadiene rubber and a hydrogenated acrylonitrile-butadiene rubber.

<5> The pneumatic tire according to any one of <1> to <4>, wherein a content of the polymer in the rubber component is 50% by mass or more.

<6> The pneumatic tire according to <4>, wherein an acrylonitrile content (% by mass) a of the polymer, a content (part by mass) b of the polymer with respect to 100 parts by mass of the rubber component, and a content (part by mass) c of the metal compound with respect to 100 parts by mass of the rubber component have a relationship of a $\times$ b / c = 180 to 600.

Advantageous Effects of Invention

According to the present invention, it is possible to provide a pneumatic tire having excellent crack resistance and a rubber composition capable of obtaining the tire.

Description of Embodiments

<Rubber Composition>

The rubber composition used in the present invention contains a rubber component containing a polymer having at least one polar functional group selected from the group consisting of a nitrile group and a pyridyl group; a metal compound containing a divalent metal ion in an amount of 7 to 25 parts by mass with respect to 100 parts by mass of the rubber component; a filler; and sulfur.

Hereinafter, a polymer having at least one polar functional group selected from the group consisting of a nitrile group and a pyridyl group may be referred to as a "specific polymer". A metal compound containing a divalent metal ion may be referred to as a "specific metal compound". A pneumatic tire may be referred to as a "tire".

It is considered that by vulcanizing the rubber component containing the specific polymer in the presence of the specific metal compound, a covalent crosslinking bond (vulcanization bond) formed between the rubber component and sulfur and an ionic crosslinking bond formed between the polar functional group and the metal compound are formed. Although it is not clear how these two types of crosslinking bonds specifically act, it is considered that when the rubber composition used in the present invention contains a rubber component containing the specific polymer, the specific metal compound, the filler, and sulfur in the above-described configuration, a tire obtained by vulcanizing the rubber composition can improve crack resistance without significantly impairing low fuel consumption and without an adhesive rubber layer or the like.

Further, since the rubber composition used in the present invention contains sulfur, there is a merit that crosslinking (vulcanization) proceeds rapidly at low cost by heating the rubber composition unlike crosslinking using a peroxide, and supply stability of the crosslinking agent is excellent.

Hereinafter, the rubber composition used in the present invention will be described in detail.

[Rubber Component]

The rubber component contains a polymer (specific polymer) having at least one polar functional group selected from the group consisting of a nitrile group and a pyridyl group.

Examples of the specific polymer include polymers having a nitrile group, such as an acrylonitrile-butadiene rubber (NBR) and a hydrogenated acrylonitrile-butadiene rubber (HNBR). Examples of the polymer having a pyridyl group include poly(2-vinylpyridine), poly(4-vinylpyridine), a 2-vinylpyridine/styrene copolymer, a 4-vinylpyridine/styrene copolymer, and a 4-vinylpyridine/methacrylate copolymer. The specific polymer may have both a nitrile group and a pyridyl group.

In addition, the specific polymer may be a polymer in which the molecular chain terminal or the molecular main chain of the polymer is modified or may be a polymer in which the molecular chain terminal or the molecular main chain of the polymer is not modified.

Among the above, the specific polymer is preferably at least one selected from the group consisting of an acrylonitrile-butadiene rubber and a hydrogenated acrylonitrile-butadiene rubber from the viewpoint of easily forming a crosslinking bond with a metal compound containing a divalent metal ion at the time of vulcanization of the rubber composition and greatly improving the crack resistance of the tire.

The acrylonitrile content in the acrylonitrile-butadiene rubber and the hydrogenated acrylonitrile-butadiene rubber is preferably 30% by mass or more, more preferably 35% by mass or more, and still more preferably 40% by mass or more. The upper limit is not particularly limited, but is preferably 75% by mass or less. When the acrylonitrile content is 30% by mass or more, a tire having crack resistance is easily obtained.

The acrylonitrile content of the specific polymer can be determined by measuring the nitrogen content in the specific polymer by the Kjeldahl method according to JIS K6384 (2016) and calculating the acrylonitrile content (unit: % by mass).

As the specific polymer, a commercially available product may be used. Examples thereof include, but are not limited to, trade names "N230S", "N220S", "N221H", "N222L", and "N215SL" manufactured by JSR Corporation; and trade names "Nipol 1043", "Nipol 1042", "Nipol 1041", and "Nipol DN003" manufactured by Zeon Corporation.

The rubber component may contain, in addition to the specific polymer, one kind or two or more kinds of natural rubber (NR) and synthetic rubber such as a polyisoprene rubber (IR), a styrene-butadiene copolymer rubber (SBR), a polybutadiene rubber (BR), an ethylene-propylene-diene rubber (EPDM), a chloroprene rubber (CR), and a halogenated butyl rubber.

The content of the specific polymer in the rubber component is not particularly limited, but is preferably 50% by mass or more, more preferably 60% by mass or more, still more preferably 70% by mass or more, and may be 100% by mass, from the viewpoint of improving crack resistance of the pneumatic tire.

[Metal Compound containing Divalent Metal Ion]

The rubber composition used in the present invention contains a metal compound containing a divalent metal ion in an amount of 7 to 25 parts by mass with respect to 100 parts by mass of the rubber component. That is, the rubber composition used in the present invention contains a metal compound containing a divalent metal ion (specific metal compound), and the content of the specific metal compound is 7 to 25 parts by mass with respect to 100 parts by mass of the rubber component.

When the content of the specific metal compound is less than 7 parts by mass with respect to 100 parts by mass of the rubber component, crack resistance of the tire is impaired.

In the rubber composition, a metal compound containing a divalent metal ion, such as zinc oxide or zinc stearate is usually used as a vulcanization aid in an amount of 2 to 4 parts by mass with respect to 100 parts by mass of the rubber component. In such a conventional rubber composition, the effect of crack resistance exhibited by the present invention cannot be obtained.

On the other hand, when the content of the specific metal compound is more than 25 parts by mass with respect to 100 parts by mass of the rubber component, an agglomerate of the specific metal compound having a higher polarity than that of the rubber composition is generated, and crack resistance is reduced due to the agglomerate.

The content of the specific metal compound with respect to 100 parts by mass of the rubber component is preferably 7 to 20 parts by mass, and more preferably 7 to 15 parts by mass.

As described above, the rubber component may contain natural rubber, butadiene rubber, or the like in addition to the specific polymer. Even in this case, the content of the specific metal compound in the rubber composition is 7 to 25 parts by mass with respect to 100 parts by mass of the rubber component, preferably 7 to 25 parts by mass with respect to 100 parts by mass of the specific polymer, more preferably 7 to 20 parts by mass with respect to 100 parts by mass of the specific polymer, and still more preferably 7 to 15 parts by mass with respect to 100 parts by mass of the specific polymer.

Examples of the divalent metal ion of the specific metal compound include a magnesium ion, a calcium ion, a barium ion, a zinc ion, a copper ion, an iron ion, a lead ion, a nickel ion, and a manganese ion. From the viewpoint of easily forming a crosslinking bond with a polar functional group of the specific polymer and improving crack resistance of the tire, the divalent metal ion is preferably at least one selected from the group consisting of a copper ion, a zinc ion, and a magnesium ion. Further, the divalent metal ion is more preferably a copper ion or a zinc ion, and still more preferably a copper ion.

The specific metal compound may be an organometal compound or an inorganic metal compound.

Examples of the organometal compound include a fatty acid salt and a thiol salt.

Examples of the fatty acid salt include saturated or unsaturated fatty acid salts having 2 to 20 carbon atoms, and the hydrocarbon chain of the fatty acid salt may be linear or branched. Specific examples thereof include zinc stearate.

Examples of the heterocyclic salt having a thiazole ring include a zinc salt of 2-mercaptobenzothiazole.

Examples of the inorganic metal compound include an oxide and a salt of an inorganic acid, and the inorganic metal compound may be a hydrate. Specific examples thereof include metal oxides, sulfates and hydrates thereof, carbonates and hydrates thereof, nitrates and hydrates thereof, and acetates and hydrates thereof. More specific examples thereof include copper oxide, copper sulfate, zinc sulfate, and magnesium sulfate. The inorganic metal compound does not include zinc oxide.

Among the above, the specific metal compound is preferably an inorganic metal compound, more preferably at least one selected from the group consisting of a sulfate, a hydrate of a sulfate, an acetate, and a hydrate of an acetate, still more preferably at least one selected from the group consisting of a sulfate and a hydrate of a sulfate, and particularly preferably a hydrate of a sulfate, from the viewpoint of easily forming a crosslinking bond with a polar functional group of the specific polymer and improving crack resistance of the tire. Specific examples of the metal compound include $CuSO_4 \cdot 5H_2O$, $ZnSO_4 \cdot 7H_2O$, and $MgSO_4 \cdot 7H_2O$.

The stage of mixing the specific metal compound is not particularly limited and may be appropriately selected.

In the case where the kneading is carried out in plural stages, mixing may be carried out in the first stage, the second stage, or the like, but mixing is preferably carried out in a stage prior to the final stage, and mixing is more preferably carried out in the first stage of kneading.

When at least one selected from the group consisting of an acrylonitrile-butadiene rubber and a hydrogenated acrylonitrile-butadiene rubber is used as the specific polymer, the specific polymer and the specific metal compound preferably have the following relationship:

$$a \times b / c = 180 \text{ to } 600$$

wherein,

a is an acrylonitrile content (% by mass) of the specific polymer,
b is a content (part by mass) of the specific polymer with respect to 100 parts by mass of the rubber component in the rubber composition, and
c is a content (part by mass) of the specific metal compound with respect to 100 parts by mass of the rubber component in the rubber composition.

When (a × b / c) is 180 or more and 600 or less, it is possible to confirm an improvement in crack resistance, which is presumed to be an effect due to the formation of an ionic crosslinking bond formed between the polar functional group and the metal compound.

(a × b / c) is more preferably 300 or more and 490 or less from the viewpoint of the balance between low fuel consumption and crack resistance.

[Filler]

The rubber composition used in the present invention contains a filler.

When the rubber composition contains a filler, abrasion resistance of the vulcanized rubber and the tire can be improved.

The filler is not particularly limited, and for example, a reinforcing filler that reinforces the rubber composition is used. Examples of the reinforcing filler include silica and carbon black, and either silica or carbon black may be used alone, or both silica and carbon black may be used.

(Silica)

The silica is not particularly limited, and general grade silica, special silica surface-treated with a silane coupling agent or the like can be used depending on the application. As the silica, for example, wet method silica is preferably used. These may be used singly or in combinations of two or more.

(Carbon Black)

The carbon black is not particularly limited and may be appropriately selected depending on the purpose. As the carbon black, for example, FEF, SRF, HAF, ISAF, and SAF grades are preferable, and HAF, ISAF, and SAF grades are more preferable. These may be used singly or in combinations of two or more.

The content of the filler in the rubber composition used in the present invention is preferably 10 to 100 parts by mass and more preferably 30 to 80 parts by mass with respect to 100 parts by mass of the rubber component from the viewpoint of crack resistance of the obtained tire.

[Sulfur]

The rubber composition used in the present invention contains sulfur.

When the rubber composition contains sulfur, crosslinking (vulcanization) proceeds rapidly at low cost by heating the rubber composition unlike crosslinking using a peroxide, and the rubber composition is excellent in supply stability.

The sulfur is not particularly limited, and examples thereof include powdered sulfur, precipitated sulfur, colloidal sulfur, surface-treated sulfur, and insoluble sulfur.

In the rubber composition used in the present invention, the content of sulfur is preferably 0.1 to 10 parts by mass with respect to 100 parts by mass of the rubber component. When the content of sulfur is 0.1 parts by mass or more, vulcanization can sufficiently proceed, and when the content of sulfur is 10 parts by mass or less, aging resistance of the vulcanized rubber can be suppressed.

From the viewpoint of forming both a covalent crosslinking bond (vulcanization bond) formed between the rubber component and sulfur and an ionic crosslinking bond formed between the polar functional group and the metal compound, and greatly improving crack resistance, the content of sulfur in the rubber composition is more preferably 0.3 to 7 parts by mass, and still more preferably 0.5 to 4 parts by mass with respect to 100 parts by mass of the rubber component.

Further, the rubber composition preferably does not contain a peroxide, and the content of the peroxide in the rubber composition is preferably less than 1 part by mass, more preferably less than 0.1 parts by mass, and still more preferably 0 parts by mass with respect to 100 parts by mass of the rubber component.

The rubber composition used in the present invention may contain, in addition to the rubber component containing the specific polymer, the specific metal compound, the filler, and sulfur, if necessary, mixing agents usually used in the rubber industry, for example, a softener, a resin, stearic acid, an aging inhibitor, and a vulcanization accelerator, which are appropriately selected within a range not impairing the object of the present invention.

<Pneumatic Tire>

The pneumatic tire of the present invention contains the rubber composition described herein.

Since the pneumatic tire of the present invention uses the rubber composition described herein, it is excellent in crack resistance while maintaining low fuel consumption.

Depending on the type and member of the tire to be applied, the tire may be obtained by molding an unvulcanized rubber composition and then subjecting the same to vulcanization, or may be obtained by performing a step of preliminary vulcanization to obtain a semi-vulcanized rubber from an unvulcanized rubber composition, and molding the same and then subjecting the semi-vulcanized rubber to main vulcanization. Among various members of the tire, from the viewpoint of excellent balance between abrasion resistance and on-ice performance, it is preferably applied to a tread member. As the gas to be filled in the tire, an inert gas such as nitrogen, argon, or helium can be used in addition to normal air or air having an adjusted oxygen partial pressure.

Examples

Hereinafter, the present invention will be described in more detail with reference to Examples, but these Examples are intended to illustrate the present invention and are not intended to limit the present invention in any way.

<Preparation of Rubber Composition and Production of Tire>

[Preparation of Rubber Composition]

(Comparative Examples 1, 3 to 5 and 7, and Examples 1 to 7)

The rubber compositions of Examples and Comparative Examples were obtained by mixing and kneading the respective components separately in the first stage of kneading and the final stage of kneading according to the mixing formulations shown in Table 1. The prepared rubber composition was vulcanized according to a conventional method to obtain a vulcanized rubber.

(Comparative Examples 2 and 6)

The rubber compositions of Examples and Comparative Examples are obtained by mixing and kneading the respective components separately in the first stage of kneading and the final stage of kneading according to the mixing formulations shown in Table 1. Further, the rubber composition is vulcanized according to a conventional method to obtain a vulcanized rubber.

<Evaluation>

(1) Evaluation of Low Fuel Consumption

(Comparative Examples 1, 3 to 5 and 7, and Examples 1 to 7)

The vulcanized rubber was measured for tanδ at a temperature of 60°C, a strain of 5%, and a frequency of 15Hz using a viscoelasticity measuring device (manufactured by Rheometrics Scientific). In Comparative Examples 1 and 3 to 5 and Examples 1 to 6, tan$\delta$ of Comparative Example 1 was set to 100, and in Comparative Example 7 and Example 7, tan$\delta$ of Comparative Example 7 was set to 100, and the measured values were expressed as an index by the following formula. As the low fuel consumption index is smaller, the vulcanized rubber is more excellent in low heat generation property and the prototype tire is more excellent in low fuel consumption. However, when the low fuel consumption index is 120 or less, the vulcanized rubber is within an allowable range and is an acceptable level. The results are shown in Tables 2 and 3.

$$\text{Low fuel consumption index} = (\text{tan}\delta \text{ of each vulcanized rubber / tan}\delta \text{ of the vulcanized rubber of Comparative Example 1}) \times 100$$

(Comparative Examples 2 and 6)

The vulcanized rubber is measured for tan$\delta$ at a temperature of 60°C, a strain of 5%, and a frequency of 15Hz using a viscoelasticity measuring device (manufactured by Rheometrics Scientific). The tan$\delta$ of Comparative Example 1 is set to 100 and expressed as an index by the following formula. As the low fuel consumption index is smaller, the vulcanized rubber is more excellent in low heat generation property and the prototype tire is more excellent in low fuel consumption. However, when the low fuel consumption index is 120 or less, the vulcanized rubber is within an allowable range and is an acceptable level. The results are shown in Table 2.

$$\text{Low fuel consumption index} = (\text{tan}\delta \text{ of each vulcanized rubber / tan}\delta \text{ of the vulcanized rubber of Comparative Example 1}) \times 100$$

(2) Evaluation of Crack Resistance

Using a tensile tester (Shimadzu Corporation), the tear strength is measured in a trouser shape according to JIS K6252-1 (2015). The measured values of Comparative Examples 1 to 6 and Examples 1 to 6 are expressed by an index ratio when the tear strength of the vulcanized rubber of Comparative Example 1 is 100, and the measured values of Comparative Example 7 and Example 7 are expressed by an index ratio when the tear strength of the vulcanized rubber of Comparative Example 7 is 100. The larger the index is, the more excellent the crack resistance is, but when the index is 120 or more, it can be said that the crack resistance is remarkably improved, which is an acceptable level. The results are shown in Tables 2 and 3.

Table 1

| | Rubber component | Types and amounts shown in Tables 2 and 3 |
|---|---|---|
| | Filler (carbon black) | Amounts shown in Tables 2 and 3 |
| Kneading First stage | Stearic acid | 2.0 parts by mass |
| | Aging inhibitor | 1.0 part by mass |
| | Metal compound | Types and amounts shown in Tables 2 and 3 |
| | Zinc oxide | 3.0 parts by mass |
| | Vulcanization accelerator A | 0.8 parts by mass |
| Kneading Final stage | Vulcanization accelerator B | 0.4 parts by mass |
| | Vulcanization accelerator C | 0.4 parts by mass |
| | Sulfur | 1.2 parts by mass |

Details of the components in Table 1 are as follows.

(1) Carbon black: "#78" manufactured by Asahi Carbon Co., Ltd.
(2) Aging inhibitor: N-(1,3-dimethylbutyl)-N'-phenyl-p-phenylenediamine, manufactured by Ouchi Shinko Chemical Industrial Co., Ltd., trade name "Nocrac 6C"

(3) Vulcanization accelerator A: manufactured by Ouchi Shinko Chemical Industrial Co., Ltd., trade name "Nocceler D"
(4) Vulcanization accelerator B: manufactured by Ouchi Shinko Chemical Industrial Co., Ltd., trade name "Nocceler DM-P"
(5) Vulcanization accelerator C: manufactured by Ouchi Shinko Chemical Industrial Co., Ltd., trade name "Nocceler NS"

Details of the components in Tables 2 and 3 are as follows.

(1) NBR: manufactured by JSR Corporation, trade name "N215SL", nitrile content 48%
(2) High-cis BR: manufactured by Ube Industries, Ltd., trade name "UBEPOL 150L"
(3) $CuSO_4 \cdot 5H_2O$: a metal compound containing divalent metal ion, copper sulfate pentahydrate, manufactured by Sigma-Aldrich
(4) $ZnSO_4 \cdot 7H_2O$: a metal compound containing divalent metal ion, zinc sulfate heptahydrate, manufactured by FUJIFILM Wako Pure Chemical Corporation
(5) ZnStearate: a metal compound containing divalent metal ion, zinc stearate, manufactured by FUJIFILM Wako Pure Chemical Corporation
(6) $MgSO_4 \cdot 7H_2O$: a metal compound containing divalent metal ion, magnesium sulphate heptahydrate, manufactured by FUJIFILM Wako Pure Chemical Corporation
(7) $Al(OH)_3$: a metal compound containing trivalent metal ion, aluminum hydroxide, manufactured by Showa Denko K.K., trade name "Higilite"

Table 2

| | | | Comparative Example 1 | Comparative Example 2 | Comparative Example 3 | Comparative Example 4 | Comparative Example 5 | Comparative Example 6 |
|---|---|---|---|---|---|---|---|---|
| Rubber component | NBR | Part | 100 | 100 | 100 | 100 | 100 | 100 |
| Filler | Carbon black | Part | 50 | 55 | 50 | 50 | 50 | 50 |
| Metal compound | $CuSO_4 \cdot 5H_2O$ | Part | - | - | - | - | 3 | 30 |
| | ZnStearate | Part | - | - | 3.0 | - | - | - |
| | Al(OH)s | Part | - | - | - | 10.0 | - | - |
| $a \times b / c$ | | | - | - | 1600 | - | 1600 | 160 |
| Evaluation | Low fuel consumption | Index | 100 | 104 | 107 | 104 | 109 | 130 |
| | Crack resistance | Index | 100 | 112 | 98 | 45 | 116 | 185 |
| | | | Example 1 | Example 2 | Example 3 | Example 4 | Example 5 | Example 6 |
| Rubber component | NBR | Part | 100 | 100 | 100 | 100 | 100 | 100 |
| Filler | Carbon black | Part | 50 | 50 | 50 | 50 | 50 | 50 |
| Metal compound | $CuSO_4 \cdot 5H_2O$ | Part | 10.0 | - | - | - | 15 | 25 |
| | $ZnSO_4 \cdot 7H_2O$ | Part | - | 10.0 | | - | - | - |
| | ZnStearate | Part | - | - | 10.0 | - | - | - |
| | $MgSO_4 \cdot 7H_2O$ | Part | - | - | - | 10.0 | - | - |
| $a \times b / c$ | | | 480 | 480 | 480 | 480 | 320 | 192 |
| Evaluation | Low fuel consumption | Index | 107 | 105 | 106 | 105 | 106 | 120 |
| | Crack resistance | Index | 368 | 242 | 187 | 194 | 222 | 207 |

Table 3

|  |  |  | Comparative Example 7 | Example 7 |
|---|---|---|---|---|
| Rubber component | NBR | Part | 70 | 70 |
|  | High-cis BR | Part | 30 | 30 |
| Filler | Carbon black | Part | 50 | 50 |
| Metal compound | $CuSO_4 \cdot 5H_2O$ | Part | - | 10 |
| $a \times b / c$ |  | - | - | 336 |
| Evaluation | Low fuel consumption | Index | 100 | 93 |
|  | Crack resistance | Index | 100 | 121 |

In Tables 2 and 3, "a × b / c" is a value calculated using the acrylonitrile content (a% by mass) of NBR contained in each rubber composition, the content (b part by mass) of NBR, and the content (c part by mass) of the metal compound containing a divalent metal ion with respect to 100 parts by mass of the rubber component.

As can be seen from Tables 2 and 3, the tires obtained from the rubber compositions of Examples 1 to 7 have significantly improved crack resistance while maintaining low fuel consumption.

On the other hand, the tires obtained from the rubber compositions of Comparative Examples do not satisfy both the desired low fuel consumption and crack resistance.

Industrial Applicability

By using the rubber composition described herein, a tire having excellent crack resistance can be obtained, and therefore, the tire of the present invention is suitably used for various tires for passenger cars, for light passenger cars, for light trucks, for heavy loads (for trucks and buses, for off-the-road tires (for vehicles for mines, construction vehicles, small trucks, and the like)), and the like. In particular, the rubber composition used in the present invention is suitably used for tire cases, tread members, and the like of various tires for passenger cars, for light passenger cars, for light trucks, for heavy loads (for trucks and buses, for off-the-road tires (for vehicles for mines, construction vehicles, small trucks, and the like)), and the like.

Examples of the case member include a sidewall, a side reinforcing rubber, a belt, a chafer, a bead, a stiffener, and an inner liner, and examples of the tread member include a cap tread and a base tread.

The rubber composition described herein is applicable to applications other than tires. Examples of applications other than tires include vibration-proof rubbers, vibration isolation rubbers, crawlers, belts, and hoses.

**Claims**

1.   A pneumatic tire comprising a rubber composition comprising: a rubber component containing a polymer having at least one polar functional group selected from the group consisting of a nitrile group and a pyridyl group; a metal compound containing a divalent metal ion in an amount of 7 to 25 parts by mass with respect to 100 parts by mass of the rubber component; a filler; and sulfur.

2.   The pneumatic tire according to claim 1, wherein the divalent metal ion is at least one selected from the group consisting of a copper ion, a zinc ion, and a magnesium ion.

3.   The pneumatic tire according to claim 1 or 2, wherein the metal compound is at least one selected from the group consisting of a sulfate, a hydrate of a sulfate, an acetate, and a hydrate of an acetate.

4.   The pneumatic tire according to any one of claims 1 to 3, wherein the polymer is at least one selected from the group consisting of an acrylonitrile-butadiene rubber and a hydrogenated acrylonitrile-butadiene rubber.

5.   The pneumatic tire according to any one of claims 1 to 4, wherein a content of the polymer in the rubber component is 50% by mass or more.

6.   The pneumatic tire according to claim 4, wherein an acrylonitrile content (% by mass) a of the polymer, a content (part by mass) b of the polymer with respect to 100 parts by mass of the rubber component, and a content (part by mass) c of the metal compound with respect to 100 parts by mass of the rubber component have a relationship of a × b / c = 180 to 600.

## Patentansprüche

1.  Luftreifen, umfassend eine Kautschukzusammensetzung, umfassend: eine Kautschukkomponente, die ein Polymer enthält, das mindestens eine polare funktionelle Gruppe aufweist, die aus der Gruppe ausgewählt ist, die aus einer Nitrilgruppe und einer Pyridylgruppe besteht; eine Metallverbindung, die ein zweiwertiges Metallion in einer Menge von 7 bis 25 Massenteilen in Bezug auf 100 Massenteile der Kautschukkomponente enthält; einen Füllstoff; und Schwefel.

2.  Luftreifen nach Anspruch 1, wobei das zweiwertige Metallion mindestens eines ist, das aus der Gruppe ausgewählt ist, bestehend aus einem Kupferion, einem Zinkion und einem Magnesiumion.

3.  Luftreifen nach Anspruch 1 oder 2, wobei die Metallverbindung mindestens eine ist, die aus der Gruppe ausgewählt ist, bestehend aus einem Sulfat, einem Hydrat eines Sulfats, einem Acetat und einem Hydrat eines Acetats.

4.  Luftreifen nach einem der Ansprüche 1 bis 3, wobei das Polymer mindestens eines ist, das aus der Gruppe ausgewählt ist, bestehend aus einem Acrylnitrilbutadienkautschuk und einem hydrierten Acrylnitrilbutadienkautschuk.

5.  Luftreifen nach einem der Ansprüche 1 bis 4, wobei ein Gehalt des Polymers in der Kautschukkomponente 50 Masse-% oder mehr beträgt.

6.  Luftreifen nach Anspruch 4, wobei ein Acrylnitrilgehalt (Massen-%) a des Polymers, ein Gehalt (Massenteil) b des Polymers in Bezug auf 100 Massenteile der Kautschukkomponente und ein Gehalt (Massenteil) c der Metallverbindung in Bezug auf 100 Massenteile der Kautschukkomponente eine Beziehung von a × b / c = 180 bis 600 aufweisen.

## Revendications

1.  Pneumatique comprenant une composition de caoutchouc comprenant : un composant de caoutchouc contenant un polymère ayant au moins un groupe fonctionnel polaire choisi dans le groupe constitué d'un groupe nitrile et un groupe pyridyle ; un composé métallique contenant un ion métallique divalent en une quantité de 7 à 25 parties en masse par rapport à 100 parties en masse du composant de caoutchouc ; une charge ; et du soufre.

2.  Pneumatique selon la revendication 1, dans lequel l'ion métallique divalent est au moins l'un choisi dans le groupe constitué d'un ion cuivre, un ion zinc et un ion magnésium.

3.  Pneumatique selon la revendication 1 ou 2, dans lequel le composé métallique est au moins un composé choisi dans le groupe constitué d'un sulfate, un hydrate d'un sulfate, un acétate et un hydrate d'un acétate.

4.  Pneumatique selon l'une quelconque des revendications 1 à 3, dans lequel le polymère est au moins un polymère choisi dans le groupe constitué d'un caoutchouc acrylonitrile-butadiène et un caoutchouc acrylonitrile-butadiène hydrogéné.

5.  Pneumatique selon l'une quelconque des revendications 1 à 4, dans lequel une teneur en polymère dans le composant de caoutchouc est d'au moins 50 % en masse.

6.  Pneumatique selon la revendication 4, dans lequel une teneur en acrylonitrile (% en masse) a du polymère, une teneur (partie en masse) b du polymère par rapport à 100 parties en masse du composant de caoutchouc, et une teneur (partie en masse) c du composé métallique par rapport à 100 parties en masse du composant de caoutchouc ont un rapport de a × b / c = 180 à 600.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011079961 A

- JP 11115406 A